Europäisches Patentamt

European Patent Office

Office européen des brevets

(19)

(11) Publication number: **0 142 358 B1**

(12) **EUROPEAN PATENT SPECIFICATION**

(45) Date of publication of patent specification: **04.09.91**   (51) Int. Cl.5: **H04N 1/36**

(21) Application number: **84307779.3**

(22) Date of filing: **09.11.84**

(54) Solid state scanner for a variable speed document transport.

(30) Priority: **14.11.83 US 551234**

(43) Date of publication of application:
**22.05.85 Bulletin 85/21**

(45) Publication of the grant of the patent:
**04.09.91 Bulletin 91/36**

(84) Designated Contracting States:
**CH DE FR GB IT LI NL**

(56) References cited:
**EP-A- 0 091 296**
**US-A- 4 285 012**
**US-A- 4 396 950**

**PATENT ABSTRACTS OF JAPAN, vol. 5, no.
30 (E-47)[702], 24th February 1981; & JP-A-55
156 468**

**Idem**

(73) Proprietor: **International Business Machines
Corporation
Old Orchard Road
Armonk, N.Y. 10504(US)**

(72) Inventor: **Bhend, Richard B.
917 Elton Hills Drive
Rochester Minnesota 55901(US)**
Inventor: **Keillor, Robert D.
1220 29th St. N.W.
Rochester Minnesota 55901(US)**
Inventor: **Lovgren, Jeffrey L.
1503 19th St. N.E.
Rochester Minnesota 55904(US)**
Inventor: **Mercer, John R.
633 23rd St. N.E.
Rochester Minnesota 55904(US)**
Inventor: **Gaebelein, Georg N.**

**deceased(US)**

(74) Representative: **Atchley, Martin John Waldeg-
rave
IBM United Kingdom Limited Intellectual
Property Department Hursley Park
Winchester Hampshire SO21 2JN(GB)**

## Description

This invention relates to the scanning of a document with a scanner in order to generate data representing images on the document and more particularly it relates to the synchronising of the handling of the data generated to the rate at which the document is moved relative to the scanner. The invention is especially related to the method of synchronising the handling of data generated when a document is scanned by a time integrating sensor array such as an array of charge coupled semiconductor devices which have to be cycled using clock pulses in order to generate data.

Document scanners are known in which the document transport is driven in stepwise fashion by a stepping motor. In these prior art systems, the scanner is cycled while the document is at rest. It is also known in the prior art to cycle a scanner continually and to discard data which was generated while the document was in stepping motion, and to discard extra data which was generated while the document was at rest but which data is redundant.

There exists a need to provide a method of synchronising the cycling of a scanner to the motion of the document being scanned without introducing distortion of the data representing the image being scanned when the document drive motor speed varies due to varying friction.

There exists a further need to provide a method of synchronising the cycling of a scanner to the motion of the document as the document is slowed down and eventually brought to rest in a continuous nonincremental motion when the data processing and data compression circuits receiving the data generated by the scanner can not keep up with the rate of data generation.

The object of the present invention is to provide apparatus for scanning a document and generating data representing images on the document including improved means for handling the data generated to account for variations in the speed of movement of the document relative to the scanner and an improved method of handling data representing images on a document using such apparatus.

The invention is set out in the appended claims. It provides scanning apparatus for generating data representing images on a document which includes a solid state time integrating photodetector array and means for cycling the array to generate data signals representing the images, a document transport system for relatively moving the array and the document to optically present successive images to said array and a synchronisation device for handling the data.

The synchronisation device comprises means responsive to movement of the document relative to the array for producing an enabling pulse signal each time the document has moved a predetermined amount with respect to the array, means for producing clock pulse signals to cycle the linear array, and logic means responsive to the enabling pulse signals and the clock pulse signals for gating out for further processing only those data signals generated by the array upon the occurrence of a predetermined relationship between the times of occurrence of one of the enabling pulse signals and one of the clock pulse signals.

The invention also includes a method of generating data representing images on a document using apparatus as above.

The invention employs a variable time integrating period to accomplish distortion free synchronisation of the array cycling rate to the document transport speed when the transport speed is within a predetermined tolerance with respect to its nominal speed. The data levels provided by the array are then multiplied by an appropriate correction factor to compensate for the varied amount of light accumulated by the time integrating photo detector array because of the varied integration time.

The document speed is indicated by emitter pulses which can be obtained from an optical, magnetic, or other signal emitter which operates as part of the document transport or the emitter pulses can be taken directly from the document such as the detection at a column of timing marks in a margin of the document.

When the document speed must be reduced to a value less than the predetermined tolerance, the apparatus of the invention resorts to the technique of selecting only data resulting from certain scan cycles and discarding the data from other scan cycles. Data selection is found to be economically accomplished by selecting that data which was being generated by time integration when an emitter pulse occurred.

In order that the invention may be more readily understood an embodiment of the invention will now be described with reference to the Figures in the accompanying drawings, in which:

FIG. 1 is a schematic of document scanning apparatus including a scanner, a document transport system and synchronising apparatus for handling the data generated by the scanner,

FIG. 2 shows the data handling synchronising apparatus of Figure 1 in more detail,

FIG. 3 is a flow diagram showing the steps of the data handling synchronising operation of the synchronising apparatus illustrated in Figures 1 and 2 showing how the operation could be performed using other apparatus, for example a programmed microprocessor,

FIG. 4 is a timing diagram showing how the synchronising apparatus operates for different speeds of movement of the document.

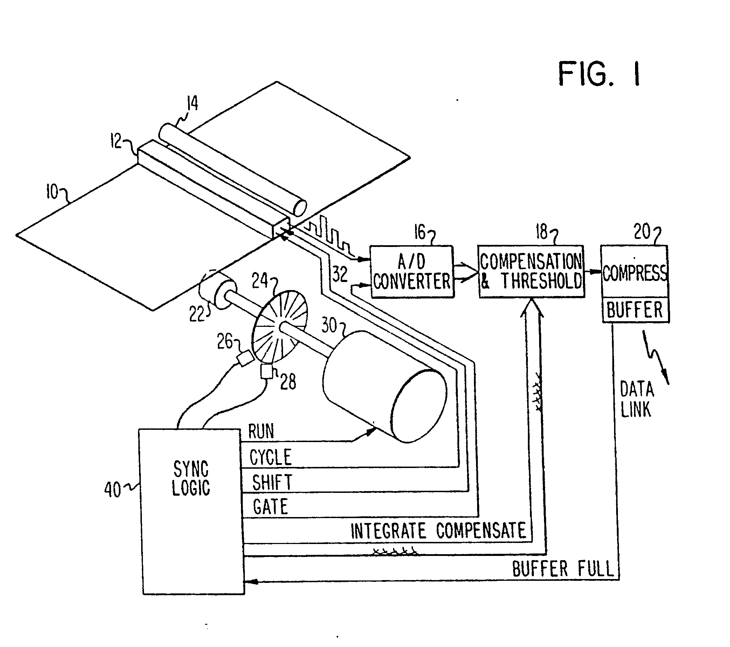

FIG. 1 shows a scanning apparatus for generating data in the form of electronic signals representing images on a document 10. The apparatus includes a scanner formed from a solid state time integrating photo detector array 12. The array 12 includes a sense array of 1024 charge coupled photosensitive devices and a parallel shift array of 1024 shift devices. A light source 14 is provided adjacent to the array 12 to provide light for reflection from the document 10 onto the array 12 in order that the array 12 may receive light of intensity representing images on the document 10. Each of the photosensitive devices of the sense array accumulates an analog voltage proportional to the intensity of the light falling upon it and the time for which the light falls. After they have integrated light for a period of time, the photosensitive devices of the sense array are cycled by transferring a signal representing the voltage accumulated by each photosensitive device to its corresponding shift device of the shift array. The photosensitive devices then begin integrating light and accumulating analog voltages again while the contents of the shift devices are shifted out of array 12 as a series of varying amplitude pulses. These pulses form data representing the images on the document 10. The document 10 is moved in a smooth continuous motion by a document transport system comprising drive motor 30 and drive roll 22 in order to optically present successive images on the document 10 to the array 12. Each time the document has moved a predetermined amount with respect to the array 12, an enabling signal in the form of an emitter pulse is generated by emitter disk 24 and emitter sensors 26 and 28.

Control means in the form of synchronising logic 40 is provided to control the motion of the document 10 and also to provide control signals labelled CYCLE, SHIFT, and GATE to the charge coupled device array 12 in order to control the handling of the data generated by the array 12. Synchronising logic 40 includes an internal oscillator which drives a variable rate clock generator for generating clock pulses which transfer the voltage signals within array 12 from the photosensitive devices to the shift devices. Synchronising logic 40 also includes logic responsive to the enabling signal for shifting out the data generated by the array upon the occurrence of a predetermined relationship between one of the emitter pulses and one of the clock shift pulses.

Still referring to FIG. 1, the data output of array 12 is a series of analog pulses of different amplitudes. These pulses are generated by the different amount of light that falls upon each integrating charge coupled device of the sense array over the period of time between successive clock cycle pulses. These different analog amplitude pulses are provided at the output of array 12 by the shift array and they are converted to digital values by A to D (analog to digital) converter 16 during those time periods in which the GATE output of synchronising logic 40 is active to enable A to D converter 16.

Synchronising logic 40 also provides an INTEGRATE COMPENSATE digital signal which is used by a compensation and threshold circuit 18 to compensate for the varying amount of time that light is permitted to accumulate within a charge coupled device due to variations in the speed of movement of document 10. After conversion to digital signals and compensation, the data signals representing the images on document 10 scanned by array 12 are compressed using well known compression techniques by compression logic 20 and buffered in a digital random access memory buffer for communication over a data link to a computer. A signal labelled BUFFER FULL is provided by the buffer when a potential over-run is detected. The BUFFER FULL signal is used by synchronising logic 40 to control motor 30.

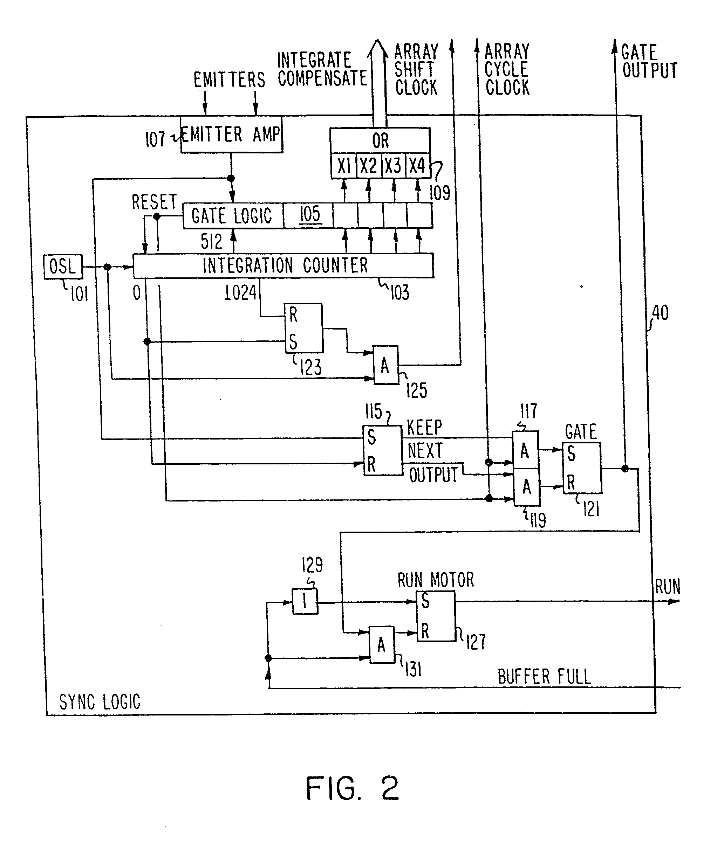

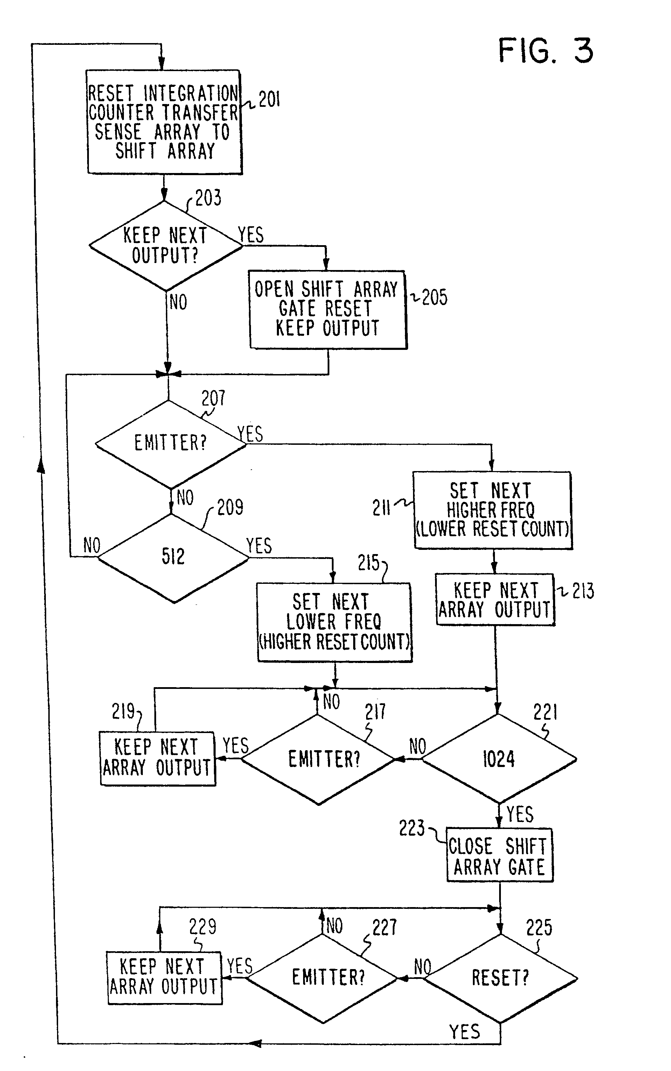

Referring now to FIG. 2, a more detailed description of the logic within synchronising logic 40 is shown. Oscillator 101 provides a sequence of fixed frequency pulses to integration counter 103 and to AND gate 125. Counter 103 in combination with gate logic 105 forms a phase locked oscillator to generate the array cycle clock pulse signals (CYCLE), the array shift clock pulse signals (SHIFT) and the gate output pulse signals (GATE) provided by synchronising logic 40. The operation of the phase locked oscillator comprising counter 103 and gate logic 105 will be more clearly understood upon later explanation with respect to FIG. 3. At this point it is sufficient to note that counter 103 counts upward until gate logic 105 generates an array cycle clock pulse signal (CYCLE) which resets counter 103 causing it once again to count upward. The count at which gate logic 105 resets integration counter 103 is greater than 1024 and can be varied and determines the frequency of the array cycle clock pulse signals (CYCLE) generated by the phase locked oscillator. There is a lower limit to the frequency of the CYCLE signals. Below this cycling frequency the sense array devices will become saturated.

In addition to responding to the count in integration counter 103, gate logic 105 responds to an output signal from an emitter amplifier 107, which amplifies the signals detected from emitter disk 24 by emitter sensors 26 and 28, by varying the count in counter 103 at which reset of the counter 103 occurs by the generation of an array cycle clock pulse signal (CYCLE) in accordance with the time of occurrence of the emitter pulse signal. In addition to being connected to and controlling integration counter 103, gate logic 105 is connected to four different multiplication factor registers 109. Gate logic 105 controls which multiplication factor is gated out as the integrate compensate signal used by the compensation and threshold circuit 18 to compensate for the amount of light that has been allowed to reach array 12 between successive array cycle clock pulse signals (CYCLE). For example, if the document is travelling slower than a nominal speed, the phase locked oscillator comprising integration counter 103 and gate logic 105 is operating at a slower frequency thereby generating array cycle clock pulse signals (CYCLE) at wider spaced time intervals. Accordingly, the digitised voltage signal derived from each charged coupled photo sensitive device of array 12 must be multiplied by a smaller number so as to compensate for the increased exposure time which generated a proportionally increased analog voltage signal from each photosensitive device. Each array cycle clock pulse signal (CYCLE) is generated at the time that integration counter 103 is reset by the signal from gate logic 105. Each array cycle clock pulse signal (CYCLE) causes the analog voltage signals accumulated by the charge coupled photosensitive devices to be transferred in parallel to corresponding stages of a shift register. Thereafter, each photo sensitive charge coupled device can again begin accumulating voltage proportional to light reflected from the images on the document 10 while the analog voltage signals in the different stages of the shift register are shifted out of array 12 in series as represented by the varying amplitude pulse train illustrated in FIG. 1. The signals in the shift register are shifted by SHIFT signals generated by pulses from oscillator 101 which are gated through AND gate 125 under control of latch 123. Latch 123 is set to open AND gate 125 and commence the shifting operation when the integration counter 103 is reset in response to the array cycle clock pulse signal (CYCLE) which loaded the shift register. Latch 123 is reset to suspend the shifting operation when the integration counter 103 reaches count 1024.

When AND gate 125 is opened by the reset of the integration counter 103 the pulses from oscillator 101 shift the contents of the stages of the shift register of array 12 to A to D converter 16 in series. If the GATE output signal from synchronising logic 40 is active as the varying amplitude pulse signals are shifted out of array 12, these signals are gated into A to D converter 16 and converted into digital values. If the GATE output signal is not active, these pulse signals are merely shifted out of the array 12 and lost. The GATE output is controlled by latch 121. Latch 121 is controlled by latch 115. Latch 115 when set indicates that the next set of output data signals shifted from the shift register of array 12 is to be saved by being gated into A to D converter 16. When latch 115 is set its output signal opens AND gate 117 which allows the next CYCLE signal to set latch 121. When latch 115 is reset, its output signal opens AND gate 119 which allows the next CYCLE signal to reset latch 121.

Latch 115 is set by an emitter pulse signal from emitter amplifier 107. At the occurrence of the next array cycle clock pulse signal (CYCLE) gate 121 is set. This CYCLE pulse signal also resets integration counter 103 causing the generation of a pulse which resets latch 115.

If the next emitter pulse signal occurs before the next CYCLE pulse signal, the latch 115 will be set again. This next CYCLE pulse signal will provide another set signal to gate 121 which is already set and therefore will not change its state.

However, if the next CYCLE pulse signal occurs before the next emitter pulse signal, since latch 115 is reset, this CYCLE pulse signal will cause gate 121 to be reset.

Latch 115 therefore detects the relative times of occurrence of successive emitter pulse signals and successive array cycle clock pulse signals (CYCLE) and causes gate 121 to remain set if emitter pulse signals and CYCLE pulse signals occur alternately in succession. Latch 115 provides a one array cycle pulse signal (CYCLE) delay between being set or reset and passing this status on to gate 121.

As described above and as will be described later with respect to FIG. 3, latch 115, indicating whether or not the next set of output data signals is to be kept, is controlled by a predetermined relationship between one of the emitter pulse signals from emitter amplifier and one of the array cycle clock pulse signals (CYCLE). More specifically, when an emitter pulse signal falls between two successive array cycle clock pulse signals, the output data collected between the array cycle clock pulse signals will be kept.

If a CYCLE pulse signal does not occur and an emitter pulse signal does occur as detected by decision block 227 shown in FIG. 3, the keep next array output latch 115 is set as shown by action block 229 of FIG. 3. When the reset pulse for integration counter 103 is ultimately generated by gate logic 105, the logic flow returns to action block 201 where the integration counter 103 is reset and the data accumulated in the sense array is transferred to the shift array of array 12.

In the example of this preferred embodiment, the predetermined relationship between the emitter pulse signals and the CYCLE pulse signals is an overlapping relationship. It would be within the skill of persons versed in the art of logic design to choose other relationships such as predetermined periods of time before and after array cycle clock pulse signals (CYCLE). The overlapping relationship of this preferred embodiment is preferred because it tends to cause emitter pulse signals to fall in the centre of the time period between successive array cycle clock pulse signals as the phase locked oscillator formed by integration counter 103 and gate logic 105 controls the frequency of the array cycle clock pulse signals as described below.

In addition to providing an array cycle clock output signal (CYCLE), an array shift clock output signal (SHIFT) and a gate output signal (GATE), synchronising logic 40 provides a run output signal (RUN) to motor 30. The run output signal (RUN) is generated by latch 127 whenever the output buffer is not full. Thus, latch 127 is set by inverter 129. Latch 127 is reset by the output of AND gate 131 whenever the buffer is full and the output of gate 121 indicates that data is being gated from the array 12 into A to D converter 16. In this way the motor runs whenever there is buffer space available and stops whenever buffer space is not available. The data links communicate the data in the buffer to a computer for further processing and as soon as the buffer empties sufficiently for the BUFFER FULL signal to be interrupted the latch 127 is set.

The operation of the above described scanning apparatus will be described with reference to the flow diagram set forth in FIG. 3. The flow diagram of FIG. 3 is substantially an alternative teaching of the logic of FIG. 2 permitting those skilled in the art of logic design to implement the invention using a programmed microcomputer instead of the logic gates implied by the logic diagram of FIG. 2. Operation begins at flow diagram block 201 wherein the integration counter 103 is reset and the contents of the charged coupled photosensitive devices of the sense array of array 12 are transferred in parallel to the shift array of array 12 by a CYCLE pulse signal. At decision block 203, a decision is made whether to keep the output of the sense array which has been transferred into the shift array in accordance with the relationship between preceding emitter pulse signals and CYCLE pulse signals.

If the output is to be kept, the shift array gate 121 is set and the keep next output latch 115 or otherwise implemented logical state is reset at flow diagram action block 205 by the action of resetting the counter 103.

The counter 103 then starts to count as a result of input signals from oscillator 101 and the sensing devices of the sense array start to generate data. After the counter 103 has counted to a predetermined count which is greater than 1024 a CYCLE pulse signal is generated. This causes the data generated in the sensing devices to be transferred to the shift devices in parallel. Further, if latch 115 is set gate 121 will be set and if latch 115 is reset gate 121 will be reset. Counter 103 will also be reset, and this will result in latch 115 being reset. Counter 103 starts to count again and data will be shifted out of the shift array devices in series. If gate 121 is set this data will be shifted to the analog to digital converter 16. If gate 121 is reset this data will be lost.

The counter 103 continues to count until the next emitter pulse signal or the next CYCLE pulse signal occurs.

If the next emitter pulse signal occurs before the next CYCLE pulse signal, these signals satisfy the predetermined relationship that they occur alternately and latch 115 will be set. When the next CYCLE pulse signal occurs the data will be transferred from the sensing devices to the array devices, gate 121 will receive a set pulse, counter 103 will be reset, latch 115 will be reset and the counter 103 will start to count once again. The data will then be shifted in series from the shift devices to the A to D converter 16 since gate 121 is set.

However, if the next CYCLE pulse signal occurs before the next emitter pulse signal, the data will be transferred from the sensing devices to the shift devices, counter 103 will be reset, latch 115 will be reset and counter 103 will start to count again. As counter 103 counts the data will be shifted out of the array devices but since gate 121 is reset this data will be lost.

After each reset of counter 103 the logic flow enters decision blocks 207 and 209 which wait for the occurrence of an emitter pulse signal and a count of 512 in integration counter 103 respectively. If an emitter pulse signal occurs before a count of 512 is reached, this indicates that the document 10 is going faster than a nominal speed and it is necessary to select the next higher frequency for the CYCLE pulse signals generated by the phase locked oscillator. This corresponds to the selection of a next lower reset count by gate logic 105 of FIG. 2. The next higher frequency is set by action block 211. Since an emitter pulse signal has been received before the next CYCLE pulse this indicates that the predetermined relationship between the emitter pulse signals and the CYCLE pulse signals has occurred and the keep next array output latch 115 is set at action block 213.

Referring back to decision block 209, if a count of 512 is reached before an emitter pulse signal is received, this indicates that the document 10 is travelling slower than the nominal speed and it is necessary to select the next lower frequency for the CYCLE pulse signals generated by the phase locked oscillator. This corresponds to gate logic 105 of FIG. 2 selecting a next higher reset count.

Setting of the next lower frequency is accomplished by action block 215 of FIG. 3.

If the emitter pulse signal occurs after a count of 512 but before a count of 1024 as represented by action blocks 217 and 221, the emitter pulse signal and the CYCLE pulse signal have satisfied the predetermined relationship and the keep next array output latch 115 is then set by action block 219 of FIG. 3.

All logic flow goes through decision block 221 which looks for a count of 1024. At a count of 1024, all the data has been shifted from the shift array devices and the array shift clock latch 123 is reset so that oscillator pulses no longer pass through AND gate 125 as shown in FIG. 2. This action is labelled "close shift array gate" in action block 223 of FIG. 3. The choice of 1024 as the count at which to close the shift gate is determined by the number of detectors in array 12. In this embodiment an array of 1024 detectors was chosen for convenience.

Thereafter, logic flow proceeds to decision block 225 which awaits a reset from gate logic 105. The count at which reset is generated by gate logic 105 depends upon which reset count has been selected which in turn depends upon the speed of the document 10. The phase locked oscillator comprising counter 103 and gate logic 105 will seek a frequency such that emitter pulses fall in the centre of the time period between successive array cycle clock pulse signals. Thus, if every other scan cycle must be discarded because the document 10 is travelling at only half speed, the phase locked oscillator will be operating at substantially the same frequency as it would be operating if the document 10 were travelling at 100% of its nominal speed.

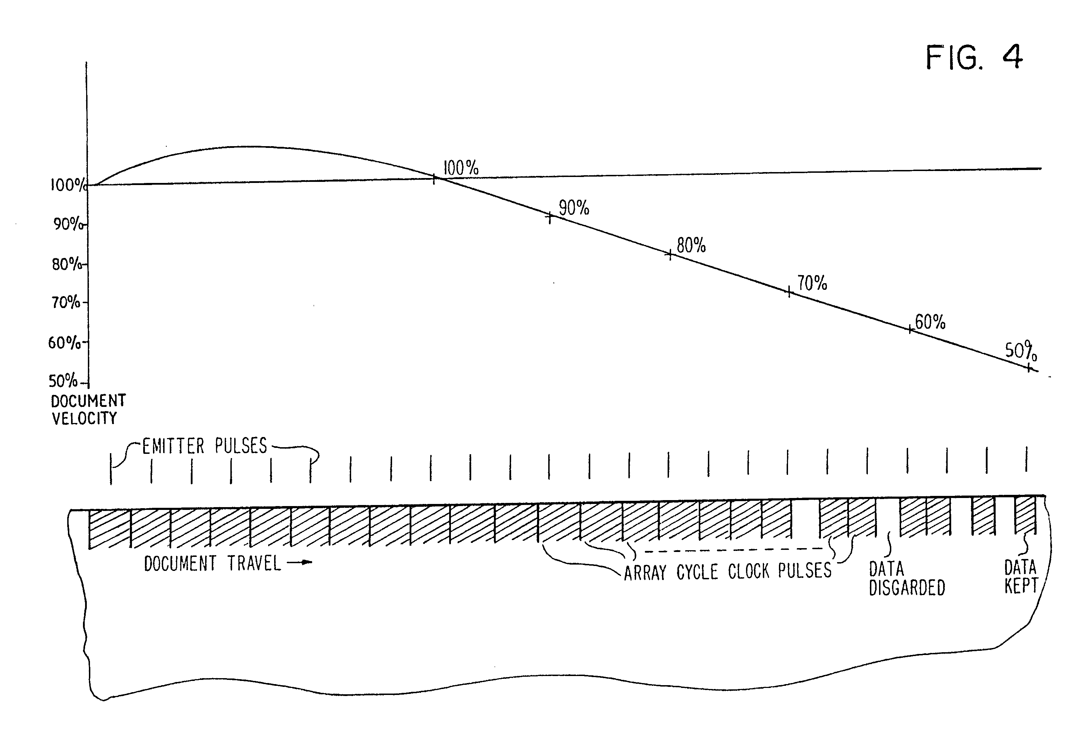

Referring now to FIG. 4, the relationship between the times of occurrence of emitter pulse signals and array cycle clock pulse signals (CYCLE) for different speeds of movement of the document is illustrated. The upper part of FIG. 4 is a curve showing speed of movement as the vertical coordinate and time as the horizontal coordinate. The lower part of FIG. 4 illustrates the relationship between the times of occurrence of the emitter pulse signals and the CYCLE pulse signals for the different speeds shown in the upper part of the Figure. The document is represented as moving at a high speed close to its nominal speed at the left hand side of the Figure and as moving at only half its nominal speed at the right hand side of the Figure.

When the document is moving fast (more than 70% of its nominal speed), as the speed of movement varies the reset count of counter 103 will be adjusted so that one CYCLE pulse signal occurs for each emitter pulse signal and at approximately half way in time between successive emitter pulse signals. Under these conditions gate 121 will remain set and all the data generated will be transferred to the A to D converter 16.

When the document speed drops below 70% of its nominal speed it will not be possible to reduce the frequency of the CYCLE pulse signals any lower without causing the sensing devices to saturate and as the document speed further reduces eventually two CYCLE pulse signals will occur between successive emitter pulse signals. This will result in the gate 121 being reset and the data generated in between the two CYCLE pulse signals will not be passed to the A to D converter 16 as illustrated in FIG. 4.

For further reduction in the document speed until about 50% of the nominal speed, the data cycled by two out of every three successive CYCLE pulse signals will be passed to the A to D converter 16. For speeds below 50% of the nominal speed only the data cycled by every other CYCLE pulse signal will be passed to the A to D converter.

FIG. 4 shows that as the document picks up speed in its travel going from 50% to 70% of its nominal speed, more of the generated data is kept. Above 70% of its nominal speed, the emitter pulse signal resolution between successive array cycle clock pulse signals (CYCLE) varies from early to late as the phase locked oscillator attempts to synchronise the array cycle clock pulse signals (CYCLE) with the emitter pulses by varying the frequency of the array cycle clock pulse signals (CYCLE). Synchronisation occurs within a reasonable number of emitter pulse signals as shown in FIG. 4, whereafter emitter pulse signals tend to occur near the centre of the time between successive array cycle clock pulse signals (CYCLE).

It is to be understood, of course, that as the frequency of the array cycle clock pulse signals is varied the amount of light collected by the photosensitive devices of the sense array of array 12 also varies. This variation in the amount of collected light results in a variation in the amplitude of the output signals from the photosensitive devices. This amplitude variation of the output signals is compensated for by providing multiplication factors inversely proportional to the frequency of the array cycle clock pulse signals by means of the multiplication factor registers 109 so that compensation and threshold logic 18 can provide digitised information representative of the images on document 10 with a minimum of distortion.

It can be seen from the foregoing description that the method and apparatus of the invention provides for scanning an image carrying document which is moved using a low cost variable speed document transport system yet provides digitised output having a minimum of integration distortion and sampling distortion by advantageously combining the amplitude compensations for integration distortion with the sampling clock frequency selection for minimum sampling distortion into a single phase locked oscillator which in turn controls scan selection logic. In this way a document can be scanned while moving at any speed from zero to in excess of 100% of the nominal speed of movement without losing data or introducing substantial distortion into the data representing the image being scanned.

## Claims

1. Scanning apparatus for generating data representing images on a document (10) including
   a solid state time integrating photodetector array (12) and means for cycling said array to generate data signals representing said images,
   a document transport system (22, 30) for relatively moving said array and said document (10) to optically present successive images to said array
   and a synchronisation device (40) for handling said data,
   characterised in that
   said synchronisation device comprises
   means (24, 26, 28) responsive to movement of said document relative to said array for producing an enabling pulse signal each time said document has moved a predetermined amount with respect to said array,
   means (103, 105) for producing clock pulse signals to cycle said linear array, and
   logic means (121, 123, 125) responsive to said enabling pulse signals and said clock pulse signals for gating out for further processing only those data signals generated by said array upon the occurrence of a predetermined relationship between the times of occurrence of one of said enabling pulse signals and one of said clock pulse signals whereby, when said predetermined relationship is occuring, all the data signals are gated out.

2. Scanning apparatus as claimed in claim 1,
   characterised in that said predetermined relationship is that said enabling pulse signals and said clock pulse signals occur alternately in time.

3. Scanning apparatus as claimed in claim 1 or claim 2,
   characterised in that said logic means enables gating out of data signals that were being generated when said enabling pulse signal occurred.

4. Scanning apparatus as claimed in any one of the preceding claims,
   characterised in that
   said means responsive to movement of said document relative to said array is an emitter which is driven in synchronism with said document.

5. Scanning apparatus as claimed in any one of the preceding claims,
   characterised in that
   said means for producing clock pulse signals further comprises
   means responsive to said enabling pulse signals to vary the frequency of said clock pulse signals to be substantially equal to the frequency of said enabling pulse signals when said enabling pulse signals occur within a predetermined range of frequencies.

6. Scanning apparatus as claimed in claim 5,
   characterised in that
   said means responsive to said enabling pulse signals is a phase locked oscillator.

7. Scanning apparatus as claimed in claim 5 or claim 6,
   characterised in that
   said synchronisation device further comprises means responsive to said means for varying the frequency of said clock pulse signals for multiplying the output data signals from said array by a correction factor related to the frequency of said clock pulse signals.

8. A method of generating data representing images on a document using a solid state time integrating photodetector array and cycling said array to generate data signals representing said images, and moving said array and said document relative to each other so as to optically present successive images to said array,
   characterised by
   monitoring the movement of said document relative to said array and producing an enabling pulse signal each time the document has moved a predetermined amount relative to said array,
   producing clock pulse signals to cycle said linear array,
   and gating out for further processing only those data signals generated by said array upon the occurrence of a predetermined relationship between the times of occurrence of one of said enabling pulse signals and one of said clock pulse signal whereby, when said predetermined relationship is occurring, all the data signals are gated out.

9. A method as claimed in claim 8
   characterised in that
   said predetermined relationship is that said enabling pulse signals and said clock signals occur alternately in time.

10. A method as claimed in claim 8 or claim 9,
    characterised in that
    the data which was being generated when said enabling pulse signal occurred is gated out of said array.

11. A method as claimed in claim 8 or claim 9 or claim 10,
    characterised in that
    said step of producing clock pulse signals further comprises the step of responding to said enabling pulse signals to vary the frequency of said clock pulse signals to be substantially equal to the frequency of said enabling pulse signals when said enabling pulse signals occur within a predetermined range of frequencies.

**Revendications**

1. Dispositif d'analyse pour engendrer des données représentant des images sur un document (10) comprenant
   un réseau de photodétecteurs d'intégration dans le temps à l'état solide (12) et des moyens pour faire fonctionner de façon cyclique ledit réseau afin d'engendrer des signaux de données représentant lesdites images,
   un système de transport de documents (22, 30) pour soumettre à un déplacement relatif ledit réseau avec ledit document (10) afin de présenter optiquement des images successives audit réseau
   et un dispositif de synchronisation (40) pour gérer lesdites données,
   caractérisé en ce que
   ledit dispositif de synchronisation comporte
   des moyens (24, 26, 28) sensibles au déplacement relatif dudit document avec ledit réseau pour produire un signal d'impulsion de conditionnement chaque fois que ledit document s'est déplacé d'une quantité prédéterminée par rapport audit réseau,
   des moyens (103, 105) pour produire des signaux d'impulsions d'horloge afin de faire fonctionner de façon cyclique ledit réseau linéaire, et
   des moyens logiques (121, 123, 125) sensibles auxdits signaux d'impulsions de conditionnement et auxdits signaux d'impulsions d'horloge pour autoriser le passage, en vue d'un traitement ultérieur, uniquement aux signaux de données engendrés par ledit réseau lors de l'apparition d'une relation prédéterminée entre les temps d'apparition d'un desdits signaux d'impulsions de conditionnement et d'un desdits signaux d'impulsions d'horloge, ce qui fait que, lorsqu'il apparaît ladite relation prédéterminée, tous les signaux de données sont autorisés à passer.

2. Dispositif d'analyse selon la revendication 1,
   caractérisé en ce que
   ladite relation prédéterminée est que lesdits signaux d'impulsions de conditionnement et lesdits signaux d'impulsions d'horloge apparaissent alternativement dans le temps.

3. Dispositif d'analyse selon la revendication 1 ou la revendication 2,
   caractérisé en ce que
   lesdits moyens logiques autorisent le passage des signaux de données qui ont été engendrés lorsqu'il est apparu ledit signal d'impulsion de conditionnement.

4. Dispositif d'analyse selon l'une quelconque des revendications précédentes,
   caractérisé en ce que
   lesdits moyens sensibles au déplacement relatif dudit document avec ledit réseau est un émetteur qui est entraîné en synchronisme avec ledit document.

5. Dispositif d'analyse selon l'une quelconque des revendications précédentes,
   caractérisé en ce que
   lesdits moyens pour produire lesdits signaux d'impulsions d'horloge comportent en outre
   des moyens sensibles auxdits signaux d'impulsions de conditionnement afin de faire varier la fréquence desdits signaux d'impulsions d'horloge de sorte qu'elle soit égale à la fréquence desdits signaux d'impulsions de conditionnement lorsque lesdits signaux d'impulsions de conditionnement apparaissent dans une gamme de fréquences prédéterminée.

6. Dispositif d'analyse selon la revendication 5,
   caractérisé en ce que
   lesdits moyens sensibles auxdits signaux d'impulsions de conditionnement sont un oscillateur à verrouillage de phase.

7. Dispositif d'analyse selon la revendication 5 ou la revendication 6,

caractérisé en ce que

ledit dispositif de synchronisation comporte en outre des moyens sensibles auxdits moyens de variation de la fréquence desdits signaux d'impulsions d'horloge pour multiplier les signaux de données de sortie provenant dudit réseau par un facteur de correction en relation avec la fréquence desdits signaux d'impulsions d'horloge.

8. Procédé pour engendrer des données représentant des images sur un document utilisant un réseau de photodétecteurs d'intégration dans le temps et faire fonctionner de façon cyclique ledit réseau afin d'engendrer des signaux de données représentant lesdites images, et pour soumettre à un déplacement relatif ledit réseau avec ledit document afin de présenter optiquement des images successives audit réseau,

caractérisé par

le contrôle du mouvement dudit document par rapport audit réseau et la production d'un signal d'impulsion de conditionnement chaque fois que le document s'est déplacé d'une quantité prédéterminée par rapport audit réseau,

la production de signaux d'impulsions d'horloge pour faire fonctionner de façon cyclique ledit réseau,

et le passage, pour un traitement ultérieur, uniquement des signaux de données engendrés par ledit réseau lors de l'apparition d'une relation prédéterminée entre les temps d'apparition d'un desdits signaux d'impulsions de conditionnement et d'un desdits signaux d'impulsions d'horloge, ce qui fait que, lorsqu'il apparaît ladite relation prédéterminée, tous les signaux de données sont autorisés à passer.

9. Procédé selon la revendication 8

caractérisé en ce que

ladite relation prédéterminée est que lesdits signaux d'impulsions de conditionnement et lesdits signaux d'horloge apparaissent alternativement dans le temps.

10. Procédé selon la revendication 8 ou la revendication 9,

caractérisé en ce que

les données qui ont été engendrées à l'apparition dudit signal d'impulsion de conditionnement, sont extraites dudit réseau.

11. Procédé selon la revendication 8, la revendication 9 ou la revendication 10,

caractérisé en ce que

ladite étape de production des signaux d'impulsions d'horloge comprend en outre l'étape de réponse auxdits signaux d'impulsions de conditionnement afin de faire varier la fréquence desdits signaux d'impulsions d'horloge de sorte qu'elle soit égale à la fréquence desdits signaux d'impulsions de conditionnement lorsque lesdits signaux d'impulsions de conditionnement apparaissent dans une gamme de fréquences prédéterminée.

## Patentansprüche

1. Abtasteinrichtung zum Erzeugen von Daten, die Bilder auf einem Dokument (10) repräsentierten mit:

einer zeitintegrierenden Festkörper-Photodetektoranordnung (12) und Mitteln zum zyklischen Durchlaufen der Anordnung, um die Bilder repräsentierenden Datensignale zu erzeugen,

einem Dokumenttransportiersystem (22, 30) zum relativen Bewegen der Anordnung und des Dokuments (10), um aufeinanderfolgende Bilder optisch an die Anordnung zu liefern,

und einer Synchronisationseinrichtung (40) zum Bearbeiten der Daten,

dadurch gekennzeichnet, daß

die Synchronisationseinrichtung folgendes aufweist:

ein Mittel (24, 26, 28), das auf eine Bewegung des Dokuments bezüglich der Anordnung anspricht, um ein Aktivierimpulssignal jedes Mal zu erzeugen, wenn sich das Dokument in einem vorbestimmten Ausmaß bezüglich der Anordnung bewegt hat,

ein Mittel (103, 105) zum Erzeugen von Taktimpulssignalen, um die lineare Anordnung zyklisch durchzulaufen und

ein Logikmittel (121, 123, 125), das auf die Aktivierimpulssignale und Taktimpulssignale anspricht, um für ein weiteres Verarbeiten nur jene Datensignale über eine Torsteuerung zu liefern, die durch die Anordnung nach dem Auftreten einer vorbestimmten Beziehung zwischen den Auftrittszeiten eines der Aktivierimpulssignale und eines der Taktimpulssignale erzeugt werden, wodurch alle Datensignale über eine Torsteuerung geliefert werden, wenn die vorbestimmte Beziehung auftritt.

2. Abtasteinrichtung nach Anspruch 1, dadurch gekennzeichnet, daß die vorbestimmte Beziehung darin besteht, daß die Aktivierimpulssignale und Taktimpulssignale zeitlich abwechselnd auftreten.

3. Abtasteinrichtung nach Anspruch 1 oder Anspruch 2, dadurch gekennzeichnet, daß das Logikmittel das Liefern von Datensignalen über eine Torsteuerung aktiviert, die erzeugt wurden, wenn das Aktivierungsimpulssignal aufgetreten ist.

4. Abtasteinrichtung nach irgendeinem der vorgehenden Ansprüche,

dadurch gekennzeichnet, daß

das Mittel, das auf eine Bewegung des Dokuments bezüglich der Anordnung anspricht, eine Gebereinrichtung ist, die synchron mit dem Dokument angetrieben ist.

5. Abtasteinrichtung nach irgendeinem der vorgehenden Ansprüche,

dadurch gekennzeichnet, daß

das Mittel zum Erzeugen von Taktimpulssignalen ferner aufweist:

Mittel, die auf die Aktivierimpulssignale ansprechen, um die Frequenz der Taktimpulssignale zu ändern, damit sie im wesentlichen gleich der Frequenz der Aktivierimpulssignale ist, wenn die Aktivierimpulssignale innerhalb eines vorbestimmten Bereiches von Frequenzen auftreten.

6. Abtasteinrichtung nach Anspruch 5,

dadurch gekennzeichnet, daß

das Mittel, das auf die Aktivierimpulssignale anspricht, ein phasenstarrer Oszillator ist.

7. Abtasteinrichtung nach Anspruch 5 oder Anspruch 6,

dadurch gekennzeichnet, daß

die Synchronisationseinrichtung ferner Mittel aufweist, die auf die Mittel zum Ändern der Frequenz der Taktimpulssignale ansprechen, um die Ausgangsdatensignale von der Anordnung durch einen Korrekturfaktor zum multiplizieren, der mit der Frequenz der Taktimpulssignale in Beziehung steht.

8. Verfahren zum Erzeugen von Daten, die Bilder auf einem Dokument repräsentieren, unter Verwendung einer zeitintegrierenden Festkörper-Photodetektoranordnung und beim zyklischen Durchlaufen der Anordnung, um die Bilder repräsentierenden Datensignale zu erzeugen und um die Anordnung und das Dokument relativ zueinander zu bewegen, um aufeinanderfolgende Bilder optisch an die Anordnung zu liefern,

gekennzeichnet durch

Überwachen der Bewegung des Dokuments bezüglich der Anordnung und Erzeugen eines Aktivierimpulssignals jedes Mal, wenn sich das Dokument in einem vorbestimmten Ausmaß bezüglich der Anordnung bewegt hat,

Erzeugen von Taktimpulssignalen, um die lineare Anordnung zyklisch durchzulaufen,

und Liefern nur jener Datensignale über eine Torsteuerung zum weiteren Verarbeiten, die durch die Anordnung nach dem Auftreten einer vorbestimmten Beziehung zwischen den Auftrittszeiten eines der Aktivierimpulssignale und eines der Taktimpulssignale erzeugt werden, wodurch alle Datensignale über eine Torsteuerung geliefert werden, wenn die vorbestimmte Beziehung auftritt.

9. Verfahren nach Anspruch 8,

dadurch gekennzeichnet, daß

die vorbestimmte Beziehung darin besteht, daß die Aktivierimpulssignale und Taktimpulssignale zeitlich abwechselnd auftreten.

10. Verfahren nach Anspruch 8 oder 9,

dadurch gekennzeichnet, daß

die bei Auftreten des Aktivierimpulssignales erzeugten Daten aus der Anordnung über eine Torsteuerung geliefert werden.

11. Verfahren nach Anspruch 8 oder Anspruch 9 oder Anspruch 10,

dadurch gekennzeichnet, daß

der Schritt zum Erzeugen von Taktimpulssignalen ferner den Schritt zum Antworten auf die Aktivierimpulssignale umfaßt, um die Frequenz der Taktimpulssignale zu ändern, damit sie im wesentlichen gleich der Frequenz der Aktivierimpulssignale ist, wenn die Aktivierimpulssignale innerhalb eines vorbestimmten Bereichs von Frequenzen auftreten.

FIG. 1

FIG. 2

FIG. 3

```
      ┌──────────────────┐
      │ RESET INTEGRATION│
      │ COUNTER TRANSFER │~201
      │  SENSE ARRAY TO  │
      │    SHIFT ARRAY   │
      └──────────────────┘
              │
            ╱203╲
      ╱  KEEP NEXT  ╲  YES    ┌──────────────────┐
      ╲   OUTPUT?   ╱────────▶│ OPEN SHIFT ARRAY │~205
       ╲          ╱           │   GATE RESET     │
         NO                   │   KEEP OUTPUT    │
          │                   └──────────────────┘
        ╱207╲
     ╱ EMITTER? ╲ YES   ┌──────────────────┐
     ╲          ╱──────▶│    SET NEXT      │~211
        NO             │  HIGHER FREQ      │
       ╱209╲           │(LOWER RESET COUNT)│
   NO╱  512  ╲YES       └──────────────────┘
     ╲       ╱                  │
                          ┌──────────────────┐
      ┌──────────────────┐│   KEEP NEXT      │~213
      │    SET NEXT      ││  ARRAY OUTPUT    │
215~  │  LOWER FREQ      │└──────────────────┘
      │(HIGHER RESET COUNT)
      └──────────────────┘
```

219~ KEEP NEXT ARRAY OUTPUT   YES   ╱217╲ EMITTER? ╲  NO   ╱221╲ 1024 ╲  YES

223~ CLOSE SHIFT ARRAY GATE

229 KEEP NEXT ARRAY OUTPUT   YES   ╱227╲ EMITTER? ╲  NO   ╱225╲ RESET? ╲  YES

# FIG. 4

DOCUMENT
VELOCITY

EMITTER PULSES

DOCUMENT TRAVEL →

ARRAY CYCLE CLOCK PULSES

DATA DISGARDED

DATA KEPT

EP 0 142 358 B1